# EUROPÄISCHE PATENTSCHRIFT

(11) **EP 2 753 501 B1**
(45) Veröffentlichungstag und Bekanntmachung des Hinweises auf die Patenterteilung: **16.12.2020**
(21) Anmeldenummer: 12746101.0
(22) Anmeldetag: 14.08.2012
(51) Int. Cl.: B60Q 3/54, B60Q 3/64, G02B 6/00, B60Q 3/74

(54) **FUNKELNDE BRILLANZ BEI EINER HINTERLEUCHTETEN DEKORSCHICHT**
SPARKLING LUMINOSITY WITH A BACK-LIT DECORATIVE LAYER
BRILLANCE ÉTINCELANTE D'UNE COUCHE DE DÉCORATION RÉTRO-ÉCLAIRÉE

(30) Priorität: 08.09.2011 DE 102011082343
(43) Veröffentlichungstag der Anmeldung: 16.07.2014
(73) Patentinhaber: Lisa Dräxlmaier GmbH, 84137 Vilsbiburg (DE)
(72) Erfinder: SCHLEMMER, Christian, 84034 Landshut (DE); BAYERSDORFER, Bernhard, 84171 Baierbach (DE)
(86) Internationale Anmeldenummer: PCT/EP2012/065876
(87) Internationale Veröffentlichungsnummer: WO 2013/034405

(56) Entgegenhaltungen:
- EP-A1- 2 028 046
- EP-A1- 2 423 731
- EP-A2- 1 495 910
- WO-A1-2005/024479
- WO-A1-2010/122789
- DE-A1- 10 313 067
- DE-A1- 10 343 778
- DE-A1-102004 044 035
- FR-A1- 2 877 896
- US-B1- 7 991 257

## Beschreibung

### TECHNISCHES GEBIET

Die Erfindung betrifft einen Dekorverbund mit einer Dekorschicht und einer Licht leitenden Schicht zur Verwendung für Dekorelemente in Fahrzeugen.

### STAND DER TECHNIK

Hinterleuchtete Dekorelemente oder dekorative Bedienelemente in Fahrzeuginnenräumen sind bekannt. Beispielsweise findet sich in modernen Fahrzeugen immer häufiger eine sogenannte Ambientebeleuchtung. Zusätzlich dazu ist die Hervorhebung von Bedienelementen, Symbolen oder dergleichen mittels einer Hinterleuchtung bekannt.

Die EP 2 028 046 A1 offenbart einen Dekorationskörper mit leuchtenden Dekorationselemente, wobei ein Licht durch eine seitlich angeordnete Leuchtdiode, eine lichtbedeckende Dekorelementschicht mit lichtundurchlässigen und lichtdurchlässigen Bereichen in die lichtleitende Schicht durchstrahlt. Die lichtundurchlässigen und lichtdurchlässigen Bereiche werden entsprechend den Dekorationselementen und einer Reflexionsschicht gebildet, die unter der lichtleitenden Schicht angeordnet ist.

Die WO 2010/122789 A1 zeigt eine Anzeigevorrichtung mit einer transparenten Lichtleiterplatte, eine Lichtquelle, die an mindestens einer Endfläche der Lichtleiterplatte vorgesehen ist, und eine Maske, die an einer Vorderseite der Lichtleiterplatte vorgesehen ist. Die Lichtleiterplatte besteht aus mehreren reflektierenden und streuenden Abschnitten mit reflektierenden und streuenden Oberflächen, die ein von der Lichtquelle emittiertes Licht reflektieren und das reflektierte Licht von einer Seite der Vorderseite emittieren. Die Maske ermöglicht es einem Betrachter, das von einem reflektierenden Teil für das rechte Auge mit dem rechten Auge reflektierte Licht und das von einem reflektierenden Teil für das linke Auge mit dem linken Auge reflektierte Licht visuell zu erkennen, wobei die reflektierten Lichtstrahlen stereoskopisch durch binokulare Parallaxe erkannt sein können.

Um Oberflächen, die in einem unbehandelten Zustand kein oder wenig Licht durchlassen, beispielsweise Leder, zu hinterleuchten, beschreibt die US 2004/0017687 A1 eine perforierte hinterleuchtete Oberfläche und ein Verfahren zur Herstellung derselben. Hierbei werden in die Dekorschicht Öffnungen eingebracht, und es wird eine Lichtquelle so hinter der Dekorschicht angeordnet, dass von der Lichtquelle ausgesandtes Licht durch die eingebrachten Öffnungen in den Fahrgastinnenraum scheint.

Aus der DE 10 2007 054 348 A1 ist eine hinterleuchtbare perforierte Verbundschicht bekannt, bei der die sichtbare Dekoroberfläche im Falle einer Nichthinterleuchtung nahezu homogen erscheint.

Aus der DE 10 2008 054 721 B3 ist ein Licht streuender Dekorverbund bekannt, der eine Dekorschicht mit Perforation und eine über der Dekorschicht angeordnete Deckschicht aufweist, wobei die Deckschicht Streuabschnitte aufweist, an denen der Streuungsgrad lokal vergrößert ist. Dadurch werden besondere Beleuchtungseffekte erzielt; insbesondere kann auf diese Weise die Homogenität der Lichtabstrahlung von dem Dekorverbund verbessert werden.

### ZUSAMMENFASSUNG DER ERFINDUNG

Eine Aufgabe der Erfindung besteht darin, einen hinterleuchtbaren Dekorverbund zu schaffen, mit dem sich für den Betrachter ein Funkeleffekt darstellen lässt.

Der erfindungsgemäße Dekorverbund weist eine Dekorschicht und eine Licht leitende Schicht auf. Beide Schichten stehen entweder direkt oder mit einer oder mehreren vollständig oder teilweise transparenten Zwischenschichten miteinander in Kontakt und bilden einen Verbund. Die Dekorschicht ist mit einer Perforation versehen, wodurch Öffnungen in der Dekorschicht ausgebildet sind. Es wird darauf hingewiesen, dass die Öffnungen, welche die Perforation bilden, die Dekorschicht nicht vollständig durchdringen müssen. Öffnungen, die nur bis zu einer gewissen Tiefe eingebracht sind, sollen auch unter dem Begriff "Perforation" fallen. Wichtig ist, dass durch die Perforation zumindest eine solche Restwandstärke der Öffnungen sichergestellt ist, dass die Dekorschicht dort vollständig oder teilweise Licht durchlässig ist, damit eine Hinterleuchtung stattfinden kann. Dabei ist mindestens eine Lichtquelle zum Einkoppeln von Licht in die Licht leitende Schicht vorgesehen. Die Licht leitende Schicht ist mit Störstellen versehen, die bei Einkopplung von Licht als voneinander unterscheidbare Lichtquellen, insbesondere als Leuchtpunkte, Leuchtlinien oder Leuchtflächen erscheinen, oder wobei zumindest Teile der Störstellen als Lichtquellen sichtbar sind, d.h. für das menschliche Auge in einem normalen Abstand als einzelne Lichtquellen oder Leuchtpunkte auflösbar sind. Dazu weisen benachbarte Störstellen einen Abstand vom wenigstens 0,1mm. Die Störstellen müssen nicht homogen über die Licht leitende Schicht verteilt sein, sondern können sich hinsichtlich ihres Abstands und/oder ihrer Größe und/oder Beschaffenheit voneinander unterscheiden. Erfindungsgemäß gilt für alle Betrachtungswinkel auf die Dekorseite des Dekorverbunds, dass eine oder mehrere Störstellen von der Dekorschicht verdeckt sind, die unter einem oder mehreren anderen Betrachtungswinkeln sichtbar sind. Mit anderen Worten wird eine örtlich offensichtliche Zuordnung der Störstellen zu jeweils einer entsprechenden Öffnung der Perforation vermieden. Beispielsweise ist bei senkrechtem Betrachtungswinkel auf die Dekorschicht unter einer Öffnung der Perforation nicht stets auch eine Störstelle vorgesehen. Die als einzelne Lichtquellen dienenden Störstellen sind somit abhängig vom Betrachtungswinkel durch die Öffnungen der Perforation jeweils mal sichtbar oder mal hinter der Dekorschicht versteckt, ohne das unter einem bestimmten Betrachtungswinkel alle Störstellen gleichzeitig sichtbar wären. Auf diese Weise wird für einen sich zum Dekorverbund bewegenden Betrachter ein Glitzer- oder Funkeleffekt erzeugt. Der erfindungsgemäße Dekorverbund ist beispielsweise zur Verwendung als Abdeckung eines Interieurteils für Fahrzeuginnenräume geeignet. Dazu kann der Verbund ggf. mit anderen Schichten oder Elementen des Interieurteils auf einem formstabilen Träger befestigt sein.

Die Licht leitende Schicht ist vorzugsweise als flächiger Lichtleiter, beispielsweise aus transparentem Kunststoff oder Glas, ausgestaltet. Neben ebenen Lichtleitern sind auch gewölbte denkbar. Als Licht leitende Schicht können auch stabförmige Lichtleiter, beispielsweise Lichtleiter mit einem kreisförmigen Querschnitt, fungieren. In diesem Fall ist die Licht leitende Schicht von der Dekorschicht zumindest teilweise ummantelt. Auch Licht leitende Schichten, welche fluide Medien enthalten sind denkbar. Bei einer weiteren Ausführungsform des Dekorverbunds ist die Licht leitende Schicht als Gitter, Gewirke oder Gewebe aus einzelnen Strängen oder Fasern, die Licht leitende Eigenschaften aufweisen, ausgebildet. Des Weiteren können Gitter, Gewirke oder Gewebe aus transluzenten oder nicht transparenten Materialen in eine vorzugsweise transparente Schicht eingebettet sein. Die Licht leitende Schicht kann mehrteilig ausgestaltet sein, insbesondere aus mehreren flächigen Schichten oder aus aneinander liegenden Körpern verschiedenster geometrischer Formen bestehen. Die Licht leitende Schicht kann an einem formstabilen Träger befestigt werden, oder die Licht leitende Schicht bildet selbst den formstabilen Träger bzw. ist ein Bestandteil davon.

Erfindungsgemäß ist die Dichte der Störstellen geringer als die Dichte der Öffnungen der Perforation und der Abstand zwischen benachbarten Störstellen beträgt wenigstens 0,1 mm. Mit anderen Worten ist die Anzahl der Störstellen pro Flächeneinheit kleiner als die Anzahle der Öffnungen der Perforation pro Flächeneinheit. Damit wird in jedem Falle und ohne einen Arbeitsschritt der gegenseitigen Ausrichtung der Dekorschicht und der Licht leitenden Schicht eine örtlich Zuordnung der Störstellen zu korrespondierenden Öffnungen vermieden.

Vorzugsweise ist die Beschaffenheit, darunter fällt auch die Größe bzw. Ausdehnung der Störstellen, und/oder Verteilung der Störstellen nicht homogen. Mit anderen Worten ändern sich zur Verstärkung des visuellen Effekts die Beschaffenheit und/oder der Abstand der Störstellen voneinander entlang der vorzugsweise flächigen Erstreckung der Licht leitenden Schicht. Wenn der Dekorverbund zudem mit einer oder mehreren Lichtquellen zum Einkoppeln von Licht in die Licht leitende Schicht versehen ist, dann verändert sich die Beschaffenheit und/oder die Dichte der Störstellen mit dem Abstand zur Lichtquelle vorzugsweise so, dass eine weitgehend homogene Abstrahlungsintensität entlang der Licht leitenden Schicht erzielt wird. Da die Intensität des eingekoppelten Lichts aufgrund von Streueffekten mit zunehmendem Abstand von der Lichtquelle abnimmt, kann auf diese Weise beispielsweise durch eine Dichtezunahme der Störstellen mit zunehmendem Abstand die Intensitätsverringerung kompensiert werden. Sind die Störstellen als Vertiefungen oder Vorsprünge ausgebildet, so kann eine Kompensation der Intensitätsverringerung durch stärkere Ausprägung der Vertiefungen oder Vorsprünge mit zunehmendem Abstand von der Lichtquelle kompensiert werden. Die lichtquellenabhängige Beschaffenheit und/oder Verteilung der Störstellen ist besonders dann wichtig, wenn das Licht seitlich in die Licht leitende Schicht eingekoppelt wird und somit vom Licht große Wege in der Licht leitenden Schicht zurückzulegen sind, auf dem eine erhebliche Intensitätsverringerung aufgrund von Streueffekten und Absorption stattfindet.

Eine weitere Verbesserung des Funkeleffekts wird erzielt, wenn die Störstellen und die Dekorschicht voneinander beabstandet sind. Dazu können die Störstellen beispielsweise überwiegend auf der Rückseite, d.h. der der Dekorschicht abgewandten Seite, der Licht leitenden Schicht vorgesehen sein. Alternativ oder zusätzlich dazu kann eine oder können mehrere zumindest teiltransparente Schichten zwischen der Licht leitenden Schicht und der Dekorschicht angeordnet sein, wobei diese teiltransparenten Zwischenschichten wiederum selbst aus Zonen mit unterschiedlichen Transparenzgraden gebildet werden können. Um weitere Lichteffekte zu erzielen, können die Zwischenschichten beispielsweise auch eingefärbt sein. Des Weiteren kann die Zwischenschicht durch ein oder mehrere grobmaschige Gewebe, Gitter, Bedruckungen oder Netzstrukturen mit und ohne Haptikfunktion, beispielsweise Textilien, Abstandsgewirke oder Metallgewebe gebildet werden, an denen das Licht gestreut wird. Insbesondere dunkle oder verspiegelte Gitterstrukturen, beispielsweise ein mehrlagiges Metallgewebe oder ein auf die Licht leitende Schicht aufgedrucktes schwarzes Gitter, können Lichtbahnen oder Schleiereffekte erzeugen, bei denen aber die Leuchtpunkte der Störstellen sichtbar bleiben. Es sollte die Zwischenschicht derart gestaltet sein, dass eine ausgeprägte Homogenisierung des an den Störstellen gestreuten Lichts vermieden wird, da sonst der erwünschte Funkeleffekt zu stark geschwächt oder vollständig verhindert wird. Zum Beispiel kann ein Abstandsgewirke in dem über den Störstellen liegenden Bereich verdünnt und/oder geöffnet werden, um die Streuung des Lichts zu vermindern.

Wie bereits erwähnt wurde, sind die Störstellen vorzugsweise zumindest teilweise durch Vertiefungen der Licht leitenden Schicht und/oder durch Vorsprünge der Licht leitenden Schicht gebildet. Das Vorsehen von Vertiefungen oder Vorsprüngen kann besonders einfach während eines Spritzgussverfahrens der Licht leitenden Schicht hergestellt werden, wenn diese beispielsweise aus PMMA, PA, PC, TPU, PU, COC oder einem anderen geeigneten Kunststoff gefertigt wird. Alternativ oder zusätzlich können die Störstellen, beziehungsweise weitere Störstellen auch nachträglich eingebracht werden. Die Vertiefungen oder Vorsprünge können halbkreisförmig oder eine andere Form aufweisen, welche zur Erzeugung von Störstellen geeignet ist. Des Weiteren ist es möglich, dass die Vertiefungen oder Vorsprünge durch eine natürliche oder künstliche Oberflächennarbung gebildet werden. Auch Risse oder Bruchkanten in der Licht leitenden Schicht können als Störstellen dienen.

Alternativ können die Störstellen als Hohlräume oder durch Fremdpartikel in der Licht leitenden Schicht ausgebildet sein.

Wird die Licht leitende Schicht durch ein Gitter oder Gewebe aus Fäden oder Fasern gebildet oder sind sie Teil dieser Schicht, können alternativ auch deren Kreuz- bzw. Knotenpunkte als Störstellen fungieren. Des Weiteren sind Fadeneinlagerungen oder Verspiegelungen der Fäden, beispielsweise durch Metallisierung, zur Erzeugung von Störstellen denkbar.

Die Oberfläche der Vorsprünge, Vertiefungen, Hohlräume oder im Allgemeinen der Störstellen muss nicht glatt sein sondern kann Kanten oder Strukturierungen aufweisen oder durch Facetten gebildet sein, um einen diamantähnlichen Glitzereffekt zu erzeugen. Letztlich dienen die Störstellen in der Licht leitenden Schicht als Bereiche lokal vergrößerter Streuung, indem der Brechungsindex lokal verändert wird. Durch die Ausprägung der Störstellen, insbesondere die Form und Anzahl ihrer Grenzflächen, kann die Streudichte und die Streurichtung gezielt beeinflusst werden. Durch eine Ausgestaltung der Störstellen mit mehreren Grenzflächen werden durch Brechung und Reflexion des Lichts an diesen Flächen vom Betrachter wahrgenommene Lichtblitze, Leuchtlinien oder Farbaufspaltungen erzeugt. Werden in die Licht leitende Schicht Fremdpartikel eingebracht, so kann darunter das Einbringen von (Hohl-)Glaskügelchen, Verunreinigungen oder andere Maßnahmen verstanden werden, welche den Streuungsgrad lokal vergrößern.

Vorzugsweise sind die Licht leitende Schicht und/oder die Zwischenschicht zumindest teilweise verspiegelt, um die Brillanz der Durchleuchtung und die Lichtausbeute weiter zu verbessern. Insbesondere können die Störstellen auf ihrer Rückseite verspiegelt sein, oder es kann die gesamte Licht leitende Schicht vollständig oder abschnittsweise auf ihrer Rückseite verspiegelt sein.

Eine weitere Ausführungsform sieht eine weitere Schicht unterhalb der Licht leitenden Schicht vor, mit welcher weitere Lichteffekte erzielt werden können oder der Funkeleffekt verstärkt wird, insbesondere wenn die Lichtquelle, wie ein Backlight oder eine OLED-Display in Form eines flächigen Lichtleiters, unterhalb der Licht leitenden Schicht angeordnet ist. Beispielsweise lassen sich durch milchige Unterschichten Schleiereffekte erzielen, durch verspiegelte Unterschichten schillernde Effekte oder durch Unterschichten mit einer Antireflexbeschichtung Farbeffekte. Ebenfalls sind eingefärbte Schichten unterhalb der Licht leitenden Schicht denkbar. Neben der Erzielung von Lichteffekten kann eine transluzente Unterschicht unerwünschte Lichtabsorptionen an Übergängen von Störstellen an der Rückseite der Licht leitenden Schicht zu dunklen Träger- oder Dekorflächen verhindern.

Ein farbiger Funkeleffekt kann nicht nur durch farbige Lichtquellen, Zwischen- und Unterschichten, sondern auch durch die Ausgestaltung der Licht leitenden Schicht und insbesondere der Störstellen erzielt werden. Beispielsweise muss dafür das von der Lichtquelle eingekoppelte weiße Licht im Bereich der Störstellen in geeigneter Weise gefiltert, gebrochen und/oder reflektiert werden. Mit Beschichtungen aus dünnen optisch transparenten Materialen, wie Metallen und/oder Dielektrika, lassen sich die Reflexionsgrade der Licht leitenden Schicht steuern und somit farbige Funkeleffekte erreichen. Sind die Störstellen zum Beispiel mit einer dünnen transparenten Metalloxidschicht beschichtet, wird das Licht an der Unterseite reflektiert und überlagert sich mit dem Licht an der Oberfläche. Dieser sogenannte Interferenzeffekt erzeugt ein ansprechendes farbiges Erscheinungsbild. Farbeffekte können ebenfalls durch eine mehrfarbige Licht leitende Schicht erzeugt werden. Sind die Störstellen mit mehreren Grenzflächen facettenartig ausgestaltet, ähnlich einer Diamantenstruktur, entstehen ebenfalls Farbeffekte durch die Reflexion und Brechung des Lichts an den Grenzflächen.

Wenn in dem Dekorverbund bereits eine oder mehrere Lichtquellen, insbesondere LED oder Lichtleiter, vorgesehen sind, dann ist diese oder sind diese Lichtquellen in einer bevorzugten Ausführungsform bezüglich der Störstellen beweglich. Auf diese Weise kann ein Funkeleffekt selbst bei stillstehendem Betrachter erzeugt werden. Alternativ oder zusätzlich kann die Lichtquelle so vorgesehen sein, dass sie zeitlich veränderlich, beispielsweise periodisch, ihre Farbe und/oder Intensität verändert. Durch eine zeitlich veränderliche Abstrahlungsintensität der Lichtquelle bzw. der Lichtquellen kann das Funkeln eines durch die Erdatmosphäre hindurch betrachteten Sternenhimmels simuliert werden.

Die Dekorschicht ist vorzugsweise aus Leder, Kunstleder oder einem lederähnlichen Material gefertigt. Da ein solches Material in seinem ursprünglichen Zustand nicht hinterleuchtbar ist und erst durch die Perforation zum Teil lichtdurchlässig wird, bedarf es geeigneter Maßnahmen, im Vorliegenden Fall einer Perforation, um die Dekorschicht zumindest teilweise hinterleuchtbar zu machen. Ledermaterialien werden insbesondere in Mittelklasse- und Oberklassefahrzeugen eingesetzt, um eine hohe Wertigkeit zu vermitteln. Daneben sind Dekorschichten, teiltransparenten oder anderen nicht transparenten Materialen, wie Folien, Papier, Holz, Glas, Metallen, Textilien, Faserverbünde, insbesondere Naturfaserverbünde, und Kombinationen aus derartiger Materialen denkbar. Die Dekorschicht kann des Weiteren mit einer zumindest einteiligen transparenten Folie oder einem Lack beschichtet sein, auch ein transparenter Deckel über der Dekorschicht ist möglich.

### KURZE BESCHREIBUNG DER ZEICHNUNGEN

Figur 1 ist ein Querschnitt durch einen Dekorverbund aus einer Dekorschicht und einer davon beabstandeten Licht leitenden Schicht mit Störstellen.
Figur 2 ist eine Draufsicht auf eine Licht leitende Schicht mit an der Seite angeordneten Lichtquellen.
Figuren 3A bis 3C sind Querschnitte durch Störstellen, die als Vorsprünge der Licht leitenden Schicht ausgebildet sind.
Figuren 4A und 4B sind Querschnitte durch ein Interieurteil, das einen Dekorverbund mit einer Dekorschicht und einer Licht leitenden Schicht mit Störstellen aufweist.
Figur 5 zeigt verschiedene Öffnungsquerschnitte der Perforation einer Dekorschicht.
Figur 6 ist ein Querschnitt durch ein Interieurteil, das einen Dekorverbund mit einer Dekorschicht und einer Licht leitenden Schicht mit Perforation aufweist.
Figur 7A ist ein Querschnitt durch einen Dekorverbund mit einer stabförmigen Licht leitenden Schicht.
Figur 7B ist eine halbmondförmige Licht leitende Schicht mit Störstellen
Figur 7C ist eine ringförmige Licht leitende Schicht mit Störstellen

### WEGE ZUR AUSFÜHRUNG DER ERFINDUNG

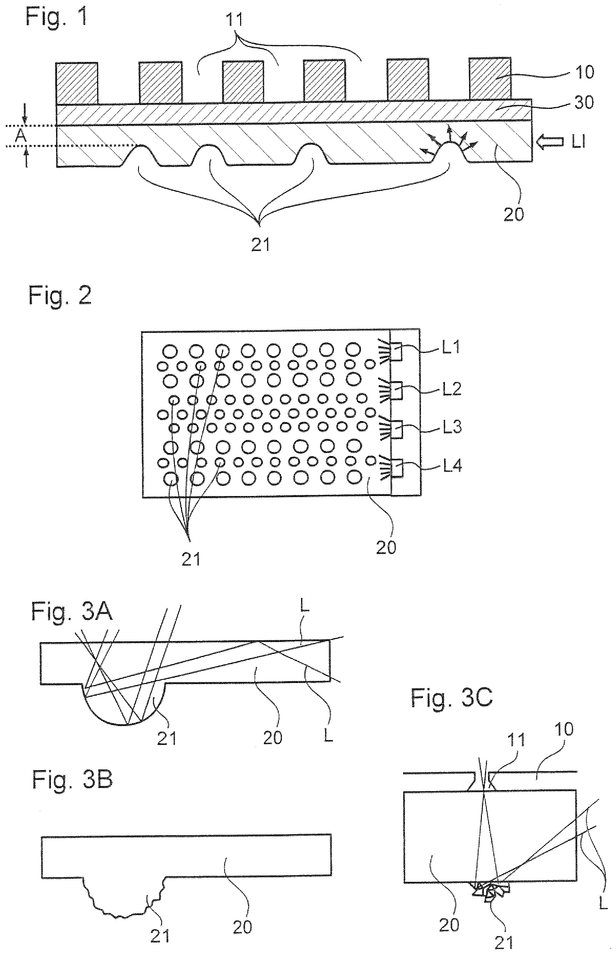

Die Figur 1 ist ein Querschnitt durch einen Dekorverbund mit einer Dekorschicht 10, die beispielsweise aus Leder gefertigt ist, und einer Licht leitenden Schicht 20, die aus einem transparenten Kunststoff gefertigt ist. Die Dekorschicht 10 weist eine Perforation auf, wodurch Öffnungen 11 in die Dekorschicht 10 eingebracht sind. Die Licht leitende Schicht 20 weist Störstellen 21 auf, die im vorliegenden Beispiel als Vertiefungen ausgebildet sind.

Während die Öffnungen 11 der Perforation in konstantem Abstand voneinander vorgesehen sind, nimmt der Abstand der Störstellen 21 in der Figur 1 von rechts nach links ab. Die Lichteinkopplung über die Lichtquelle L1 erfolgt in der Figur 1 von rechts, wodurch die Abnahme des Abstands der Störstellen 21 von rechts nach links den Intensitätsverlust des Lichts bei der Ausbreitung durch die Licht leitende Schicht 20 kompensiert. Die Störstellen 21 sind lokale Bereiche verstärkter Streuung, an denen das auftreffende Licht so gestreut wird, dass die Störstellen 21 als einzeln erkennbare Leuchtpunkte fungieren.

Die Dichte der Störstellen 21 ist geringer als die Dichte der Öffnungen 11 der Perforation. Mit anderen Worten ist die Anzahl der Störstellen 21 pro Flächeneinheit geringer als die Anzahl der Öffnungen 11 pro Flächeneinheit. Damit wird in jedem Falle und ohne einen Arbeitsschritt der gegenseitigen Ausrichtung der Lage der Dekorschicht 10 und der Licht leitenden Schicht 20 eine besondere örtlich Zuordnung der Störstellen 21 zu korrespondierenden Öffnungen 11 vermieden. Aus der Figur 1 ist erkennbar, dass nicht sämtliche Störstellen 21 direkt unterhalb der Öffnungen 11 angeordnet sind. Abhängig vom Betrachtungswinkel von oben ist somit die eine oder andere Störstelle 21 sichtbar, während andere Störstellen 21 von der Dekorschicht 10 verdeckt sind. Mit Änderung des Betrachtungswinkels werden neue Störstellen 21 sichtbar, während wiederum andere Störstellen 21 hinter der Dekorschicht 10 verschwinden. Dieser Effekt wird hier als Funkeleffekt bezeichnet.

Im vorliegenden Beispiel wird der Funkeleffekt nicht nur dadurch erzielt, dass die Dichte der Störstellen 21 geringer als die Dichte der Öffnungen 11 ist, sondern auch dadurch, dass sich die Störstellen 21 in einem Abstand zu den Öffnungen 11 der Dekorschicht 10 befinden, der sich aus dem Abstand A der Störstellen 21 zur Vorderseite der Licht leitenden Schicht 20 und der Dicke einer transparenten Zwischenschicht 30 zusammensetzt. Der Abstand der Störstellen 21 zur Dekorschicht kann beispielsweise etwa 2 mm betragen.

Ferner müssen die aus den Störstellen 21 gebildeten Leuchtpunkte als einzelne Punkte für einen Betrachter auflösbar sein. Hierzu ist es vorgesehen, den Abstand der Störstellen 21 nicht geringer als 1/10 mm festzulegen. Vorzugsweise liegt der Abstand der Störstellen 21 im Bereich von 0,5 bis 2 mm. Die Durchmesser der im vorliegenden Fall als Vertiefungen ausgebildeten Störstellen 21 kann im Bereich von 1/5 bis 2 mm liegen. Obwohl es in der Figur 1 nicht gezeigt ist, können die Tiefen der Störstellen 21 variieren. Das ist insbesondere im Hinblick auf eine von den Störstellen 21 möglichst gleichmäßig abgestrahlte Lichtintensität wünschenswert, nämlich dann wenn sich die Intensität des eingekoppelten Lichts entlang der Ausbreitung in der Licht leitenden Schicht 20 merklich verringert. Damit eine von der Lichtquelle L1 ausgesehene hintere Störstelle 21 die gleiche Abstrahlungsintensität wie eine weiter vorn angeordnete Störstelle 21 aufweist, kann die hintere Störstelle 21 tiefer und/oder mit einer stärker streuenden Oberfläche ausgebildet sein.

Auch die Lage der Störstellen 21 entlang der Dickenrichtung der Licht leitenden Schicht 20 und die Beschaffenheit der Störstellen 21 kann variieren, um einen geeigneten Hinterleuchtungseffekt zu erzielen.

Zwischen der Licht leitenden Schicht 20 und der Dekorschicht 10 ist vorzugsweise keine weitere stark streuende Schicht vorgesehen.

In der Figur 1 sind die Störstellen 21 als Vertiefungen ausgebildet. Alternativ oder zusätzlich dazu können die Störstellen 21 als Vorsprünge oder Hohlräume oder als in die Licht leitenden Schicht 20 eingebrachte Fremdpartikel ausgebildet sein. Beispielsweise können in die Licht leitenden Schicht 20 Glaspartikel eingebracht werden, die einen Glitzereffekt erzeugen. Stets sorgt die lokale Änderung des Brechungsindex an den Grenzflächen der Störstellen 21 dafür, dass eine lokal erhöhte Streuung auftritt, sodass die Störstellen 21 in dem durchleuchteten oder angeleuchteten Lichtleiter als einzelne Leuchtpunkte oder Lichtblitze erscheinen.

Obwohl die Öffnungen 11 der Perforation in der Figur 1 als Durchgangsöffnungen dargestellt sind, können die Öffnungen 11 auch als Sacklöcher oder in Form anderer Ausnehmungen mit einer gewissen Restwandstärke ausgebildet sein. Die Restwandstärke der Dekorschicht 10 muss so eingestellt werden, dass die Dekorschicht 10 an diesen Stellen zumindest teiltransparent ist.

Die Licht leitende Schicht 20 kann aus verschiedenen transparenten Kunstoffen hergestellt sein und kann sogar die optischen Eigenschaften mit haptischen Eigenschaften verbinden. Selbst lichtdurchlässige Textilien oder Vliesstoffe kommen in Frage, wenn sie prägnante Lichtreflexionen- bzw. streuungen, beispielsweise durch spezielle Fadeneinlagerungen oder Knotenpunkte, zulassen.

Bevorzugt ist die Licht leitende Schicht 20 aus PMMA, PA, PC, TPU, PU oder COC ausgebildet.

Als Lichtquellen L1 kommen beispielsweise LEDs, OLEDs oder sogenannte Backlights in Frage. Die Lichtquelle L1 kann zudem beweglich vorgesehen sein, um das Funkeln unabhängig von einer Bewegung des Betrachters zu machen oder zu verstärken. Ein ähnlicher Effekt kann auch durch sich zeitlich verändernde steuerbare Lichtintensitäten der Lichtquelle(n) L1 oder deren Reflexionen an dem Lichtleiter oder an der Licht leitenden Schicht 20 erzeugt werden. Eine flächige Beleuchtung kann mit funkelnden Lichterscheinungen überlagert werden. Als Stellgrößen zur Erzeugung des gewünschten Funkeleffekts dienen die Anzahl der Störstellen 21, d.h. der "Lichtblitze" oder Lichtspiegelungen innerhalb eines definierten Flächenabschnittes, die Öffnungsquerschnitte der Perforation, das Verhältnis der Anzahl der Öffnungen 11 zur Anzahl der Störstellen 21, die Dicke der Dekorschicht 10, die Geometrie der Öffnungen 11, worunter auch der Einbringwinkel der Öffnungen 11 in die Dekorschicht 10 fällt, die Beschaffenheit der Licht leitenden Schicht 20, die im Übrigen aus mehreren Schichten aufgebaut sein kann, die Dicke der Licht leitenden Schicht 20, usw..

Figur 2 ist eine Draufsicht auf eine Licht leitende Schicht 20 mit Störstellen 21. Es ist eine seitliche Einkopplung von Licht mit LEDs L1, L2, L3 und L4 vorgesehen. Wahlweise können diese oder andere LEDs an einer oder mehreren der anderen drei Seiten angeordnet sein. Im Übrigen ist auch eine rückseitige Anordnung von Lichtquellen möglich, sodass eine rückseitige Durchstrahlung der Licht leitenden Schicht 20 stattfindet.

Die als Vertiefungen und/oder Vorsprünge ausgebildeten Störstellen 21 fungieren als Mikrolinsen, wie es schematisch anhand des Strahlengangs in den Figuren 3A bis 3C dargestellt ist. Beispielhafte Lichtstrahlen L breiten sich in der Licht leitenden Schicht 20 aus und werden von den Grenzflächen der Störstellen 21 reflektiert und nach oben gestreut.

In der Figur 3A ist die Störstelle 21 als halbkreisförmiger Vorsprung ausgeprägt. In der Figur 3B ist eine unregelmäßige Grenzfläche dargestellt, mit Stufen oder Sprüngen, um die Streuwirkung der Störstelle 21 weiter zu erhöhen. Gemäß der Ausführungsform der Figur 3C weist die Störstelle 21 facettenartige Grenzflächen auf, um die Brillanz eines Diamanten nachzuahmen. Während in der Figur 3C die Dekorschicht 10 mit einer speziellen Öffnungsgeometrie dargestellt ist, wurde auf eine Darstellung der Dekorschicht 10 in den Figuren 3A und 3B verzichtet.

Der Streueffekt kann weiter verstärkt werden, wenn Grenzflächen der Störstellen 21 und/oder die gesamte oder Teilflächen der Rückseite der Licht leitenden Schicht 20 verspiegelt werden.

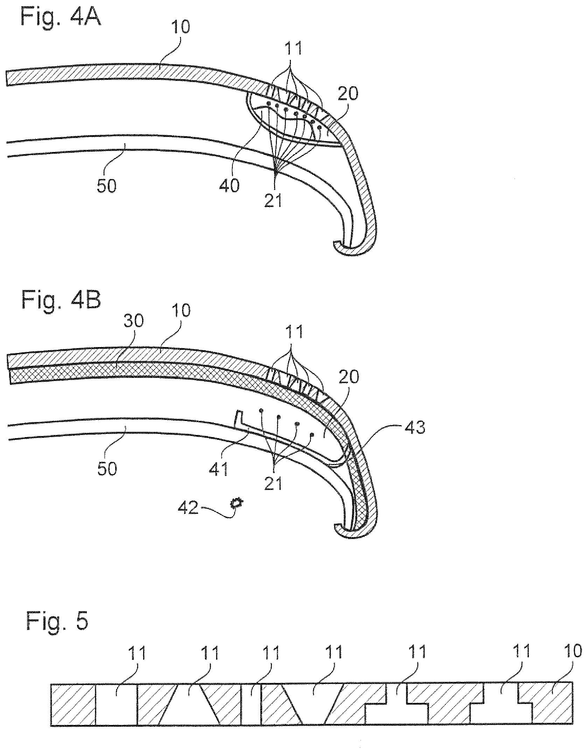

Die Figuren 4A und 4B zeigen Ausführungsformen eines Interieurteils mit einem Dekorverbund mit einer Dekorschicht 10 und einer Licht leitenden Schicht 20 mit Störstellen 21. Die Dekorschicht 10 ist mit Öffnungen 11 versehen, die in den Figuren 4A, 4B unterschiedliche Geometrien und Winkellagen aufweisen. Das Licht leitende Material kann hart oder für eine haptisch ansprechende Wirkung flexibel sein. Die Lichtquelle 40 ist in der Figur 4A als OLED, Backlight oder eine Ansammlung von LEDs ausgeführt. Die Lichtquelle ist im Wesentlichen hinter der Licht leitenden Schicht 20 angeordnet, sodass eine Hinterleuchtung des Dekorverbunds stattfindet.

Ein anderes Hinterleuchtungskonzept ist in der Figur 4B dargestellt. Dort ist zusätzlich zu einer seitlich angeordneten Lichtquelle 43, ein Backlight 41 und eine einzelne Lichtquelle 42 dargestellt, deren Position(en) geeignet festgelegt sind oder sogar beweglich vorgesehen sein kann bzw. können.

In den Figuren 4A und 4B ist ein formstabiler Träger 50 vorgesehen, der das Gehäuse des Backlights 41 und den darüberliegenden Aufbau aus Licht leitender Schicht 20, Zwischenschicht 30 und Dekorschicht 10 trägt. Von der Lichtquelle 43 wird das Licht seitlich in die Licht leitende Schicht 20 und in das Backlight 41 eingekoppelt; die zusätzliche Lichtquelle 42 kann optional vorgesehen sein oder beweglich vorgesehen sein, um durch die Überlagerung der drei Lichtquellen einen besonderen optischen Effekt zu erzielen.

Mögliche Öffnungsgeometrien der Perforation sind in der Figur 5 dargestellt, denn neben der Beschaffenheit und Lage der Störstellen 21 in der Licht leitenden Schicht 20 wird der Funkeleffekt auch durch die Geometrie und Winkellage der Öffnungen 11 beeinflusst.

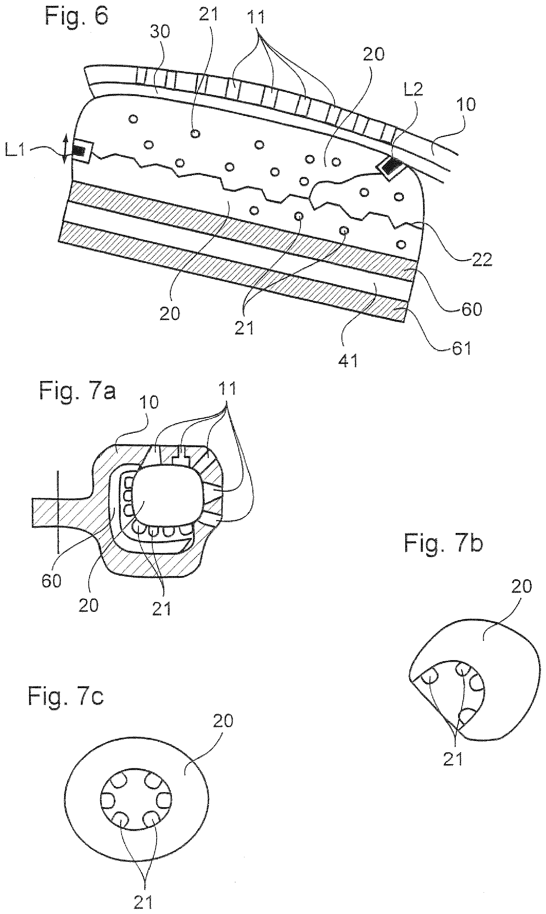

Die Figur 6 ist ein Querschnitt durch einen Dekorverbund mit einer Dekorschicht 10, einer Zwischenschicht 30, die als Haptikschicht ausgebildet ist, und einer Licht leitenden Schicht 20 mit Störstellen 21. Neben den als Hohlräume oder Einschlüsse von Fremdpartikeln ausgeprägten Störstellen 21 ist eine Reflexionsstruktur 22 vorgesehen, die in die Licht leitende Schicht 20 eingearbeitet ist. Die Reflexionsstruktur kann durch die Grenzfläche zwischen einer mehrteiligen, zusammengesetzten Licht leitenden Schicht 20 gebildet werden, oder ein Metallgewebe oder eine verspiegelte Schicht sein. Zwei Lichtquellen L1 und L2 sind in der Figur links-unten und rechts-oben in der Licht leitenden Schicht 20 eingebettet. Die Lichtquellen L1 und L2, die bevorzugt als LEDs ausgeführt sind, können hinsichtlich ihrer Abstrahlungsintensität, Farbe und Position einstellbar und/oder zeitlich veränderbar sein. Mit dem Referenzzeichen 41 wird ein Backlight oder eine OLED bezeichnet, die eine flächige Lichteinstrahlung bewirken. Zudem können optional Folien als Unterschichten 60, 61 vorgesehen sein, um den Lichteffekt, der mit der Hinterleuchtung zu erzielen ist, farblich einzustellen oder einen Schleiereffekt zu erzeugen. Es kann unterschiedlich überlagerte Lichteffekte geben. Im Beispiel der Figur 6 überlagern sich das von den LEDs L1 und L2, dem Backlight 41 und dem von den Störstellen 21 und der Reflexionsstruktur 22 erzeugte Licht. Konkret überlagern sich flächiges Licht von dem Bereich der Licht leitenden Schicht 20 unterhalb der Reflexionsstruktur 22 mit weißlicher funkelnder Brillanz, die von der Reflexionsstruktur und den Störstellen 21 erzeugt wird.

Generell können die als Mikrolinsen fungierenden Störstellen 21 in verschiedener Größe, Anordnung und Beschaffenheit vorgesehen sein. Beispielsweise können Sie, wie auch die Öffnungen 11 der Perforation, in geometrische Formen gruppiert sein, konkav oder konvex ausgebildet sein, usw.. Die Störstellen 21 können verspiegelt und/oder facettenartig mit mehreren Grenzflächen versehen sein, um weitere Lichteffekte, wie Farb- und Lichtblitzeffekte, zu erzielen. In die Licht leitende Schicht 20 können Lichtleiter, Lichtquellen, Reflexionsschicht, usw. eingearbeitet sein, wie es in der Figur 6 gezeigt ist, um überlagerte Lichteffekte zu erzielen.

Um den Hinterleuchtungseffekt weiter zu verstärken, kann eine Grundfläche auf der der Dekorseite abgewandten Seite der Licht leitenden Schicht 20 vorgesehen sein. Diese Grundfläche kann verspiegelt sein oder einen farblichen Kontrast darstellen.

Figur 7A stellt eine weitere mögliche Ausführungsform des erfindungsgemäßen Dekorverbunds dar. Die Licht leitende Schicht 20 ist als stabförmiger Lichtleiter ausgebildet. Die Dekorschicht 10 ist an zwei Seiten mit Öffnungen 11 versehen. Auf eine Zwischenschicht zur Beabstandung kann verzichtet werden, da die Störstellen 21 in der Licht leitenden Schicht 20 an der den Öffnungen 11 gegenüberliegenden Rückseite angeordnet sind. Da die Dekorschicht 10 die Licht leitende Schicht 20 komplett ummantelt, können beim Übergang im Bereich der Störstellen 21 zur Dekorschicht 10 unerwünschte Lichtverluste durch Adsorption auftreten. Um dies zu verhindern, ist eine transparente Unterschicht 60 vorgesehen. Diese transparente Unterschicht 60 kann gleichzeitig als Lichtquelle in Form eines Backlights dienen.

Weitere Ausführungsbeispiele für einen stabförmigen Lichtleiter als Licht leitende Schicht 20 zeigen die Figuren 7B und 7C. In Figur 7B weist die Licht leitende Schicht eine halbmondförmige Gestalt auf. Alternativ ist in Figur 7C ls eine ringförmige Gestalt dargestellt. Die Störstellen 21 sind jeweils im Inneren des Querschnitts der Licht leitenden Schicht 20 angeordnet.

## Patentansprüche

1. Dekorverbund mit einer Dekorschicht (10) und einer Licht leitenden Schicht (20), wobei
die Dekorschicht (10) mit einer Perforation versehen ist, wodurch Öffnungen (11) in der Dekorschicht (10) ausgebildet sind und durch die Perforation zumindest eine Restwandstärke der Öffnungen (11) sichergestellt ist, wobei die Öffnungen (11) die Dekorschicht (10) nicht vollständig durchdringen und nur bis zu einer gewissen Tiefe eingebracht sein können, so dass die Dekorschicht (10) vollständig oder teilweise Licht durchlässig ist, damit eine Hinterleuchtung stattfinden kann,
mindestens eine Lichtquelle (L1) zum Einkoppeln von Licht in die Licht leitende Schicht (20) vorgesehen ist,
die Licht leitende Schicht (20) mit Störstellen (21) versehen ist, die bei Einkopplung von Licht in die Licht leitende Schicht (20) als einzeln erkennbare Leuchtpunkte, Leuchtlinien oder Leuchtflächen fungieren,
eine oder mehrere der durch die Störstellen (21) gebildeten Leuchtpunkte, Leuchtlinien oder Leuchtflächen in einem Betrachtungswinkel auf die Dekorschicht (10) von der Dekorschicht (10) verdeckt sind, während sie unter einem oder mehreren anderen Betrachtungswinkeln sichtbar sind, **dadurch gekennzeichnet, dass** die Dichte der Störstellen (21) geringer als die Dichte der Öffnungen (11) der Perforation ist und
der Abstand zwischen benachbarten Störstellen wenigstens 0,1 mm beträgt.

2. Dekorverbund nach Anspruch 1, **dadurch gekennzeichnet, dass** die Beschaffenheit und/oder Verteilung der Störstellen (21) nicht homogen ist.

3. Dekorverbund nach einem der vorhergehenden Ansprüche, **dadurch gekennzeichnet, dass** die Störstellen (21) und die Dekorschicht (10) voneinander beabstandet sind.

4. Dekorverbund nach einem der vorhergehenden Ansprüche, **dadurch gekennzeichnet, dass** die Störstellen (21) zumindest zum Teil durch Vertiefungen der Licht leitenden Schicht (20) und/oder durch Vorsprünge der Licht leitenden Schicht (20) gebildet sind.

5. Dekorverbund nach einem der vorhergehenden Ansprüche, **dadurch gekennzeichnet, dass** die Störstellen (21) zumindest zum Teil durch Hohlräume, Fremdpartikel und/oder Knotenpunkte eines Gewebes bzw. Gitters der Licht leitenden Schicht (20) gebildet sind.

6. Dekorverbund nach einem der vorhergehenden Ansprüche, **dadurch gekennzeichnet, dass** die Licht leitende Schicht (20) zumindest teilweise verspiegelt ist.

7. Dekorverbund nach Anspruch 1, **dadurch gekennzeichnet, dass** sich die Beschaffenheit und/oder die Dichte der Störstellen (21) mit Abstand zur Lichtquelle (L1) so verändert, dass eine weitgehend homogene Abstrahlungsintensität über die Licht leitende Schicht (20) erzielt wird.

8. Dekorverbund nach Anspruch 1 oder 7, **dadurch gekennzeichnet, dass** die Farbe und/oder Intensität des von der Lichtquelle (L1) abgestrahlten Lichts zeitlich veränderlich ist und/oder die Lichtquelle bezüglich der Störstellen (21) der Licht leitenden Schicht (20) beweglich ist.

9. Dekorverbund nach einem der vorhergehenden Ansprüche, wobei der Abstand zwischen benachbarten Störstellen 0,5 mm bis 2 mm beträgt.

10. Dekorverbund nach einem der vorhergehenden Ansprüche, wobei die Öffnungen (11) in Form von Löchern ausgebildet sind.

## Claims

1. Decorative composite having a decorative layer (10) and a light-guiding layer (20), wherein
the decorative layer (10) is provided with a perforation, whereby openings (11) are formed in the decorative layer (10) and at least a residual wall thickness of the openings (11) is ensured by the perforation, wherein the openings (11) do not entirely penetrate the decorative layer (10) and can have been introduced only up to a specific depth, with the result that the decorative layer (10) is entirely or partially transmissive to light so that backlighting can take place,
at least one light source (L1) is provided for coupling light into the light-guiding layer (20),
the light-guiding layer (20) is provided with defects (21) that act as individually perceivable light-emitting points, light-emitting lines or light-emitting areas when light is coupled into the light-guiding layer (20),
one or more of the light-emitting points, light-emitting lines or light-emitting areas formed by the defects (21) are covered by the decorative layer (10) at one viewing angle onto the decorative layer (10) while they are visible at one or more different viewing angles, **characterized in that**
the density of the defects (21) is less than the density of the openings (11) of the perforation and
the distance between adjacent defects is at least 0.1 mm.

2. Decorative composite according to Claim 1, **characterized in that** the character and/or distribution of the defects (21) is not homogeneous.

3. Decorative composite according to either of the preceding claims, **characterized in that** the defects (21) and the decorative layer (10) are at a distance from one another.

4. Decorative composite according to one of the preceding claims, **characterized in that** the defects (21) are at least in part formed by depressions in the light-guiding layer (20) and/or by protrusions of the light-guiding layer (20).

5. Decorative composite according to one of the preceding claims, **characterized in that** the defects (21) are at least in part formed by cavities, foreign particles and/or node points of a woven fabric or mesh of the light-guiding layer (20).

6. Decorative composite according to one of the preceding claims, **characterized in that** the light-guiding layer (20) is at least in part made reflective.

7. Decorative composite according to Claim 1, **characterized in that** the character and/or the density of the defects (21) varies with the distance from the light source (L1) such that a largely homogeneous emission intensity over the light-guiding layer (20) is attained.

8. Decorative composite according to Claim 1 or 7, **characterized in that** the colour and/or intensity of the light emitted by the light source (L1) is variable over time and/or the light source is movable relative to the defects (21) of the light-guiding layer (20).

9. Decorative composite according to one of the preceding claims, wherein the distance between adjacent defects is 0.5 mm to 2 mm.

10. Decorative composite according to one of the preceding claims, wherein the openings (11) are embodied in the form of holes.

## Revendications

1. Composé décoratif comprenant une couche décorative (10) et une couche conductrice de lumière (20),
la couche décorative (10) étant pourvue d'une perforation, moyennant quoi des ouvertures (11) sont formées dans la couche décorative (10) et au moins une épaisseur de paroi résiduelle des ouvertures (11) étant garantie par la perforation, les ouvertures (11) ne traversant pas complètement la couche décorative (10) et ne pouvant pénétrer que jusqu'à une certaine épaisseur, de sorte que la couche décorative (10) est entièrement ou partiellement transparente, afin qu'un rétroéclairage puisse avoir lieu,
au moins une source de lumière (L1) destinée à injecter de la lumière dans la couche conductrice de lumière (20) étant présente,
la couche conductrice de lumière (20) étant pourvue d'imperfections (21) qui, lors de l'injection de lumière dans la couche conductrice de lumière (20), font office de points lumineux, lignes lumineuses ou surfaces lumineuses reconnaissables individuellement,
un ou plusieurs des points lumineux, lignes lumineuses ou surfaces lumineuses formés par les imperfections (21) étant, dans un angle d'observation sur la couche décorative (10), recouverts par la couche décorative (10) alors qu'ils sont visibles sous un ou plusieurs autres angles d'observation,
**caractérisé en ce que**
la densité des imperfections (21) est inférieure à la densité des ouvertures (11) de la perforation et l'écart entre des imperfections voisines est au moins égal à 0,1 mm.

2. Composé décoratif selon la revendication 1, **caractérisé en ce que** la nature et/ou la distribution des imperfections (21) n'est pas homogène.

3. Composé décoratif selon l'une des revendications précédentes, **caractérisé en ce que** les imperfections (21) et la couche décorative (10) sont espacées les unes des autres.

4. Composé décoratif selon l'une des revendications précédentes, **caractérisé en ce que** les imperfections (21) sont formées au moins en partie par des cavités de la couche conductrice de lumière (20) et/ou par des parties saillantes de la couche conductrice de lumière (20).

5. Composé décoratif selon l'une des revendications précédentes, **caractérisé en ce que** les imperfections (21) sont formées au moins en partie par des espaces creux, des particules étrangères et/ou des points nodaux d'un tissu ou d'une grille de la couche conductrice de lumière (20) .

6. Composé décoratif selon l'une des revendications précédentes, **caractérisé en ce que** la couche conductrice de lumière (20) est au moins partiellement réfléchissante.

7. Composé décoratif selon la revendication 1, **caractérisé en ce que** la nature et/ou la densité des imperfections (21) varie en fonction de l'écart de la source de lumière (L1) de sorte qu'une intensité de rayonnement substantiellement homogène est obtenue sur la couche conductrice de lumière (20).

8. Composé décoratif selon la revendication 1 ou 7, **caractérisé en ce que** la couleur et/ou l'intensité de la lumière rayonnée par la source de lumière (L1) peut varier dans le temps et/ou la source de lumière est mobile par rapport aux imperfections (21) de la couche conductrice de lumière (20).

9. Composé décoratif selon l'une des revendications précédentes, l'écart entre des imperfections voisines étant de 0,5 mm à 2 mm.

10. Composé décoratif selon l'une des revendications précédentes, les ouvertures (11) étant réalisées sous la forme de trous.
